# EUROPÄISCHE PATENTSCHRIFT

(11) **EP 3 180 251 B1**
(45) Veröffentlichungstag und Bekanntmachung des Hinweises auf die Patenterteilung: **19.07.2023**
(21) Anmeldenummer: 15700550.5
(22) Anmeldetag: 12.01.2015
(51) Int. Cl.: B65C 3/06, B29C 63/42

(54) **VERFAHREN UND VORRICHTUNG ZUM AUFBRINGEN EINER SCHRUMPFFOLIENHÜLSE**
METHOD AND DEVICE FOR THE APPLICATION OF SHRINK FILM SLEEVE
PROCÉDÉ ET DISPOSITIF DE MONTAGE D'UN MANCHON DE FILM RÉTRACTABLE

(30) Priorität: 14.08.2014 DE 102014216191
(43) Veröffentlichungstag der Anmeldung: 21.06.2017
(73) Patentinhaber: Krones AG, 93073 Neutraubling (DE)
(72) Erfinder: LANG, Florian, 93073 Neutraubling (DE); SCHERL, Stefan, 93073 Neutraubling (DE); EGGL, Thomas, 93073 Neutraubling (DE); BRAATZ, Bernd, 93073 Neutraubling (DE); KRIEGER, Robert, 93073 Neutraubling (DE)
(74) Vertreter: Grünecker Patent- und Rechtsanwälte PartG mbB
(86) Internationale Anmeldenummer: PCT/EP2015/050424
(87) Internationale Veröffentlichungsnummer: WO 2016/023639

(56) Entgegenhaltungen:
- EP-A1- 0 763 498
- JP-A- 2002 331 497
- JP-A- 2005 046 972
- JP-A- 2005 178 790
- US-A- 4 765 121
- US-A1- 2013 118 136

## Beschreibung

Die Erfindung betrifft ein Verfahren der im Oberbegriff des Anspruchs 1 erläuterten Art und eine Vorrichtung zum Aufbringen einer Schrumpffolienhülse auf ein Behältnis.

Zum Ausstatten von Flaschen, Dosen oder dergleichen mit rohrförmigen Folien bzw. Etikettenhülsen, den sogenannten Sleeves , werden Ausstattungsmaschinen, wie beispielsweise in der WO 00/66437 beschrieben, verwendet, die eine Vorrichtung zum Auffalten eines flachliegenden Folienschlauchs und Abschneiden von Folien bzw. Etikettenhülsen in einer gewünschten Länge aufweist.

Das Gebrauchsmuster DE 20104972 U1 zeigt bereits eine Vorrichtung zum Auffalten und Abschneiden eines Folienschlauchs. Es wird eine Vorrichtung zum Auffalten eines Folienschlauchs mittels Auffaltdorn beschrieben, wobei der Folienschlauch in Axialrichtung über den Auffaltdorn gezogen wird, und dabei in Radialrichtung aufgeweitet wird. Die Vorrichtung weist eine im unteren Endbereich des Auffaltdorns angeordnete Schneideinrichtung auf, zum umfänglichen Durchtrennen des aufgefalteten Folienschlauchs von der radial äußeren Seite her, wobei die radial innere Seite des Folienschlauchs vom Auffaltdorn abgestützt wird. Der Auffaltdorn weist hier in Höhe der Schneidmittel federelastisch beaufschlagte Stützelemente auf, die den Folienschlauch an seiner Innenfläche stützen. Bei diesem Stand der Technik tritt das Problem auf, dass bedingt durch die Stillstandszeit beim Abschneiden des Folienschlauchs, keine hohen Leistungen möglich sind.

Auch die in der WO 00/66437 beschriebene Vorrichtung weist einen formsteifen Auffaltdorn auf und funktioniert so lange zufriedenstellend, solange der Durchmesser des zu verarbeitenden Folienschlauchs einen bestimmten, relativ engen Toleranzbereich nicht überschreitet. Bei Folienhülsen minderer Qualität, d.h. mit Durchmesserschwankungen in einem weiten Toleranzfeld, können dagegen Probleme beim Schneiden des Folienschlauchs entstehen, da ein formsteifer Auffaltdorn in der Regel in seinem unteren, der Schneidebene nahe Bereich einen dem geringstmöglichen Innendurchmesser des Folienschlauchs entsprechenden Außendurchmesser aufweist, um ein Festsitzen des Schlauchs auf dem Auffaltdorn zu vermeiden. Bewegt sich der Folienschlauchdurchmesser im größtmöglichen Toleranzbereich, kann der zwischen der Schlauchinnenseite und der Dornaußenfläche vorhandene Spalt so groß werden, dass der Schlauch während dem Abschneiden einer Folienhülse an seiner Innenseite nicht ausreichend abgestützt wird. Das Ergebnis ist eine unsaubere Schnittlinie mit welliger oder ausgefranster Schnittkante. Dieses Problem tritt insbesondere bei Schrumpffolienhülsen auf, die relativ starr sind und darüber hinaus auch leicht einreißen.

Die Patentschrift EP 0 763 498 A1 offenbart ein Verfahren gemäß dem Oberbegriff des Anspruchs 1 und eine entsprechende Vorrichtung.

Hiervon ausgehend liegt der vorliegenden Erfindung die Aufgabe zugrunde, Schrumpffolienhülsen mit hoher Leistung ohne die Verwendung von Schneidmessern auf Behältnisse aufzubringen.

Erfindungsgemäß wird diese Aufgabe durch die Merkmale der Ansprüche 1 und 11 gelöst.

Im Verfahren der vorliegenden Erfindung wird also zunächst die flach gefaltete Schrumpffolienhülse perforiert und zwar in vorbestimmten Abständen, die der Höhe der sogenannten Sleeves bzw. Etiketten entsprechen. Die Schrumpffolienhülse liegt hier als flachgefalteter Schlauch vor. Das Perforieren erfolgt quer zur Längsrichtung der Schrumpffolienhülse, d.h. quer zur Transportrichtung T. Die Schrumpffolienhülse wird dann entlang der Auffalteinrichtung mit einem Förderrollenpaar transportiert, d.h. in Axialrichtung über die Auffalteinrichtung gezogen. Die Schrumpffolienhülse wird somit in Radialrichtung aufgeweitet. Das Förderrollenpaar liegt an der Auffalteinrichtung an und kann somit die dazwischenliegende Schrumpffolienhülse transportieren.

Die Schrumpffolienhülse wird an der Perforierung abgerissen und zwar mit Hilfe eines in Transportrichtung T nachgeordneten Spenderollenpaars, dessen Transportgeschwindigkeit V_{Abreiß} zum Abreissen zumindest zeitweise größer ist als die Transportgeschwindigkeit des Förderrollenpaars V_{Förder}. Unter Transportgeschwindigkeit versteht man die Geschwindigkeit, mit der die entsprechenden Rollen die Schrumpffolienhülse in Axialrichtung bewegen, d.h. die Umlaufgeschwindigkeit der Rollen.

Durch die unterschiedlichen Transportgeschwindigkeiten der in Transportrichtung hintereinander angeordneten Rollenpaare entsteht eine Zugkraft auf die Perforierung, so dass die Schrumpffolienhülse an der Perforierung abreißt und die Abreißkanten auseinander bewegt werden.

Zumindest zeitweise bedeutet hier, dass die Rollen insgesamt zumindest solange schneller laufen, dass die Schrumpffolienhülse aufgrund einer Zugspannung an der Perforierung abgerissen werden kann. Die Geschwindigkeit muss dabei auch nicht konstant sein. Die Spendenrollen können auch nur einen Teil einer Umdrehung mit höherer Geschwindigkeit laufen, insbesondere dann, wenn nicht der gesamte Rollenumfang der Transferrolle zum Abziehen bzw. Abreißen benötigt wird.

Dann erfolgt das Abschießen der abgetrennten Schrumpffolienhülse auf ein Behältnis, z.B. ein Flasche, Dose etc. Die Schrumpffolienhülse kann dann nachfolgend über eine Schrumpfeinrichtung thermisch auf das Behältnis aufgeschrumpft werden.

Dadurch, dass die Schrumpffolienhülse nun nicht länger abgeschnitten wird, sondern an der Perforierung abreißt, spielen Durchmessertoleranzen keine Rolle mehr. Somit können auch starre Schrumpffolienhülsen mit sauberen Kanten abgetrennt werden. Ein kontinuierlicher Prozess ist möglich, ohne dass zum Abtrennen der Vorgang gestoppt werden muss. Somit ist es möglich, bis zu 70.000 abgetrennte Schrumpffolienhülsen bzw. Sleeves oder Etiketten pro Stunde auf Behältnisse aufzubringen. Beschädigungen der starren und empfindlichen Schrumpffolien können wirksam verhindert werden.

Es ist vorteilhaft wenn als Material für die Schrumpffolie PET - Material oder ein OPS oder auch PVC verwendet wird, und die Stärke der Folie insbesondere in einem Bereich von 10 - 100 µm liegt, vorzugsweise 15 - 60 µm.

Erfindungsgemäß wird die perforierte Schrumpffolienhülse vor dem Schritt b), d.h. vor dem Auffalten einer Puffereinrichtung, d.h. einem Schlaufenpuffer zugeführt. Mit Hilfe der Puffereinrichtung kann die Länge des im Puffer geförderten Schrumpffolienschlauchs variiert werden.

Erfindungsgemäß erfolgt das Abschießen durch das Spenderollenpaar. Dies ist besonders vorteilhaft, da die abgetrennte Schrumpffolienhülse, die ohnehin starr ist, nicht erneut von einem neuen, nach dem Spenderollenpaar zusätzlichen Rollenpaar ergriffen werden muss, was einerseits schonend ist, und andererseits die Ansteuerung und den Aufbau der Vorrichtung erheblich vereinfacht. Zum Abschießen der abgetrennten Schrumpffolienhülse auf das Behältnis wird dann das Spenderollenpaar auf eine Transportgeschwindigkeit beschleunigt, die größer ist als die Transportgeschwindigkeit V_{Abreiß} zum Abreißen. Das Spenderollenpaar kann zum Abschießen auch eine Transportgeschwindigkeit V_{Abschieß} aufweisen, die der Transportgeschwindigkeit V_{Abreiß} entspricht.

Vorteilhafterweise hat also das Spenderollenpaar zwei Funktionen gleichzeitig, nämlich die Abreißfunktion als auch die Abschießfunktion. Das macht das System besonders kostengünstig und einfach. Wenn das Spenderollenpaar sowohl mit einer Transportgeschwindigkeit V_{Abreiß} als auch mit einer höheren Transportgeschwindigkeit V_{Abschieß} angetrieben werden kann, können die entsprechenden Geschwindigkeiten exakt auf die Anforderungen des Abreißens und auch auf die Anforderungen des Abschießens eingestellt werden. Dies ist vorteilhafter im Vergleich zu nur einer erhöhten Transportgeschwindigkeit zum Abschießen und Abreißen.

Gemäß einem bevorzugten Ausführungsbeispiel werden bei den Schritten c) bis e) folgende Phasen durchlaufen, nachdem zuerst einmal beim Anlaufen des Systems das Förderrollenpaar und das Spenderollenpaar auf eine bestimmte Fördergeschwindigkeit beschleunigt wurden (Phase 1).

Das Förderrollenpaar und Spenderollenpaar laufen in der Phase 2 mit gleicher Transportgeschwindigkeit, wobei die Schrumpffolienhülse, die noch nicht abgetrennt ist, durch das Förderrollenpaar zum Spenderollenpaar transportiert wird. In Phase 3 wird die Transportgeschwindigkeit des Spenderollenpaars auf eine Transportgeschwindigkeit V_{Abreiß} erhöht, wodurch die Schrumpffolienhülse an der Perforierung abgerissen wird und die Abrisskanten dann auseinander gezogen werden.

In der Phase 4 wird das Spenderollenpaar auf eine Transportgeschwindigkeit V_{Abschieß} beschleunigt, die vorzugsweise größer ist als die Transportgeschwindigkeit zum Abreißen V_{Abreiß}, wodurch die abgetrennte Schrumpffolienhülse beschleunigt und abgeschossen wird.

In einer fünften Phase wird das Spenderollenpaar auf die Transportgeschwindigkeit des Transportrollenpaars abgebremst.

Es ist auch möglich, dass zwischen der Phase 3 und 4 in einer Phase 3a zunächst das Spenderollenpaar wieder auf eine Transportgeschwindigkeit V_{Förder}, die der Transportgeschwindigkeit des Transportrollenpaars entspricht, abgebremst wird, derart, dass zwischen Phase 3 und 4 das abgerissene Etikett bzw. die abgerissene Schrumpffolienhülse synchron zur Schrumpffolienhülse, die noch in einem Stück, also als Schlauch, vorliegt, fährt. Es kann dann auch das Spenderollenpaar zum Abschießen eine Transportgeschwindigkeit V_{Abschieß} aufweisen, die der Transportgeschwindigkeit V_{Abreiß} entspricht.

Die Phasen 2 bis 5 können dann kontinuierlich hintereinander wiederholt werden.

Vorteilhafterweise bleibt die Transportgeschwindigkeit des Förderrollenpaars, insbesondere während der Phasen 2 bis 5, konstant.

Vorteilhafterweise wird zumindest das Spenderollenpaar über einen Servoantrieb angetrieben. Dies ermöglicht, dass die unterschiedlichen Geschwindigkeiten, z.B. V_{Abreiß}, V_{Abschieß}, exakt eingestellt werden können. Es ist vorteilhaft, wenn auch das Transportrollenpaar mittels Servoantrieb angetrieben wird.

Gemäß einer bevorzugten Ausführungsform wird das Behältnis unterhalb der Auffalteinrichtung mit einer Fördereinrichtung in eine Förderrichtung P gefördert und die flach zusammengefaltete Schrumpffolienhülse der Auffalteinrichtung derart zugeführt, dass sich die flache Seite der Schrumpffolienhülse unter einem Winkel β von 0 bis <90°, vorzugsweise 0° zur Fördereinrichtung P erstreckt. Wenn der Winkel β = 0° bedeutet dies, dass sich die flache Seite der gefalteten Schrumpffolienhülse parallel zur Förderrichtung P erstreckt und in dieser Richtung auf die Auffalteinrichtung und das Behältnis aufgebracht wird. Dies ist insbesondere vorteilhaft beim Aufbringen von Schrumpffolienhülsen auf Formflaschen, insbesondere mit länglichem bzw. ovalem Querschnitt. Entsprechende Formflaschen können nur in Längsrichtung ausgerichtet auf der Fördereinrichtung, d.h. z.B. dem Transportband gefahren werden, da sie sonst sehr leicht kippen. Wenn die Schrumpffolienhülse im Bereich der Auffalteinrichtung um 90° gedreht wird, damit die Falte der gefalteten Schrumpffolienhülse sich im Seitenbereich der Formflasche befindet und nicht auf der Vorderseite, bringt dies den Nachteil mit sich, dass beim Einsatz eines Abreißaggregats dann die Perforation unkontrolliert reißen kann.

Gemäß der vorliegenden Erfindung wird jedoch die gefaltete perforierte Schrumpffolienhülse für Formflaschen mit der flachen Seite nicht mehr senkrecht zur Transportrichtung P zugeführt, sondern vorzugsweise mit der flachen Seite parallel zur Transportrichtung P. Somit können störende Falten oder Schweißnähte im Frontbereich einer entsprechenden Formflasche verhindert werden. Es ist jedoch auch möglich, dass der Winkel β in einem Bereich von 0 bis <90° liegt. Somit kann die Kante gezielt am Umfang platziert werden. Die Schrumpffolienhülse kann also je nach Flaschenform der Auffalteinrichtung in dem entsprechenden Winkel zugeführt werden. Die Schrumpffolienhülse muss nicht im Bereich der Auffalteinrichtung verdreht werden.

Unter flachen Seite des gefalteten Folienschlauchs vesteht man die flächige Vorder- oder Rückseite.

Die erfindungsgemäße Vorrichtung weist eine Steuerung auf, die die Antriebe des Förderrollenpaars bzw. Spenderollenpaars zum Abreißen, insbesondere zum Abschießen, entsprechend ansteuert. Die Vorrichtung weist eine Perforiereinrichtung auf.

Erfindungsgemäß weist die Vorrichtung eine der Perforiereinrichtung nachgeordnete Puffereinrichtung auf.

Gemäß einer weiteren Ausführungsform können das Transportrollenpaar und Spenderollenpaar kontinuierlich mit jeweils konstanter Geschwindigkeit angetrieben werden, wobei vorteilhafterweise die Transportgeschwindigkeit des Spenderollenpaars bis zum zehnfachen der Transportgeschwindigkeit des Förderrollenpaars betragen kann.

Der Abstand zwischen Transportrollenpaar und Spenderollenpaar ist vorteilhafterweise über eine Verstelleinrichtung verstellbar.

Die Vorrichtung kann eine Fördereinrichtung umfassen, die unterhalb der Auffalteinrichtung angeordnet ist und die das Behältnis in Förderrichtung P fördert, und eine Zuführeinrichtung, die derart angeordnet ist, dass die flach zusammengefaltete Schrumpffolienhülse der Auffalteinrichtung derart zugeführt wird, dass sich die flache Seite der Schrumpffolienhülse unter einem Winkel von 0 bis <90°, vorzugsweise 0° zur Förderrichtung P erstreckt. Es ist auch möglich, dass die Zuführeinrichtung verstellbar ausgebildet ist, derart, dass der Winkel β in einem Bereich von 0-90° einstellbar ist und an eine bestimmte Flaschenform angepasst werden kann.

Nachfolgend wird die vorliegende Erfindung unter Bezugnahme der nachfolgenden Figuren näher erläutert:
- Fig. 1: zeigt schematisch eine Seitenansicht einer nicht erfindungsgemäßen Vorrichtung.
- Fig. 2: zeigt grob schematisch einen Abschnitt einer schlauchförmigen, flach gefalteten Schrumpfhüllfolienhülse mit Perforierungen.
- Fig. 3: zeigt ein Diagramm, bei dem die Transportgeschwindigkeit des Spenderollenpaars in Abhängigkeit der Zeit aufgetragen ist.
- Fig. 4: zeigt ein Diagramm, das die Transportgeschwindigkeit des Förderrollenpaars und des Spenderollenpaars in Abhängigkeit der Zeit zeigt, sowie dazu entsprechende Positionen der Schrumpffolienhülse.
- Fig. 5: zeigt schematisch eine Gesamtansicht eines Schrumpffolienhülsenaggregats zum Einsatz der Vorrichtung gemäß der vorliegenden Erfindung.
- Fig. 6: zeigt eine nicht erfindungsgemäße Vorrichtung, die der in Figur 1 gezeigten Vorrichtung entspricht, wobei die Schrumpffolienhülse um 90° versetzt zugeführt wird.
- Fig. 7: zeigt die in Figur 5 gezeigte schematische Gesamtansicht, mit um 90° versetztem Winkel β.
- Fig. 8: zeigt schematisch einen Schnitt durch Formflaschen, die mit einer Anordnung wie in Figur 1 und 5 gezeigt ist, gefertigt werden.
- Figur 9: entspricht Figur 8, wobei hier die Behälter mit den in Figuren 6 und 7 gezeigten Vorrichtungen hergestellt werden.
- Figur 10a: zeigt grob schematisch eine Aufsicht auf das Förderband mit senkrecht zur Transportrichtung angeordneter Zuführrolle.
- Figur 10b: entspricht Figur 10a, jedoch mit parallel zur Förderrichtung ausgerichteter Zuführolle.
- Figur 10c: entspricht Figuren 10a und 10b mit schräg angeordneter Zuführrolle.

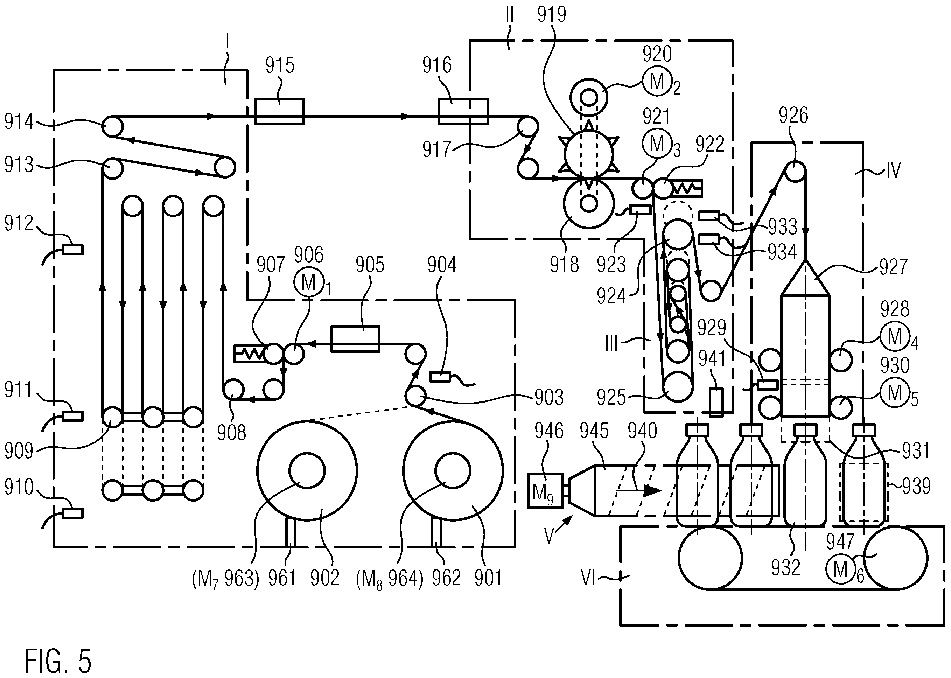

In Figur 5 ist zur besseren Orientierung eine detaillierte Gesamtansicht eines Schrumpffolienhülsenaggregats zum Einsatz einer Vorrichtung zum Aufbringen von Schrumpffolienhülsen gemäß der vorliegenden Erfindung dargestellt. Es versteht sich, dass die in Figur 5 dargestellten Komponenten durch im Stand der Technik bekannte, alternative Ausführungen ersetzt oder auch weggelassen werden können, soweit diese vom Gegenstand der unabhängigen Ansprüche umfasst werden.

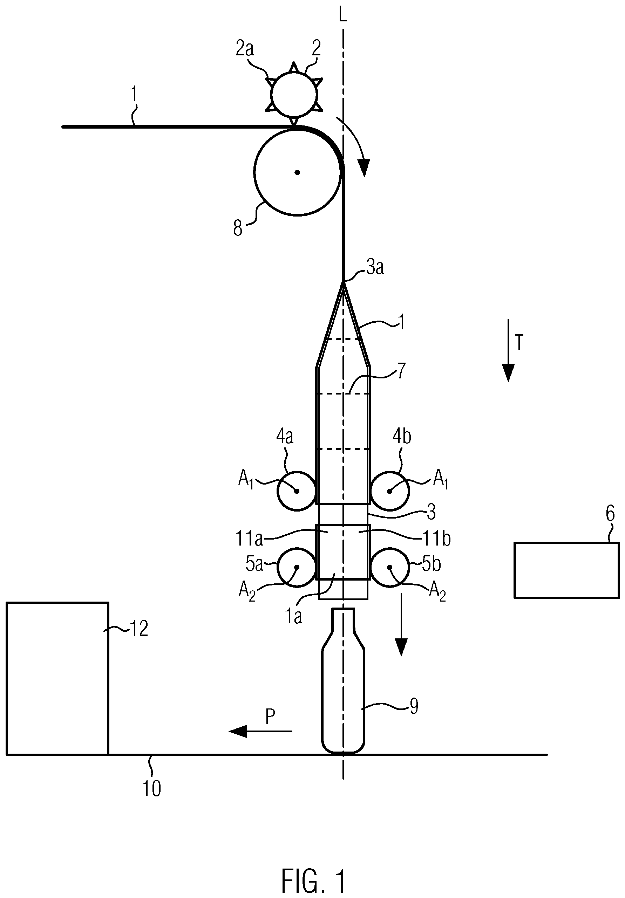

Die für die Abreißeinheit IV exemplarisch dargestellte Ausführung mit einem Paar von Förderrollen 928 und einem Paar von Abreißrollen 930 ist gemäß der vorliegenden Erfindung durch die in der Figur 1 gezeigten Weiterbildungen zu ersetzen. Die in Figur 5 dargestellten Komponenten dienen somit lediglich der Veranschaulichung einer Baugruppe, in die die oben beschriebenen Weiterbildungen integriert werden können.

Die Figur 5 zeigt ein Schrumpffolienhülsenaggregat, das sich aus den Baugruppen I - VI zusammensetzt. Dabei bezeichnen die Baugruppe I eine Etikettenbevorratung mit einem Schlaufenpuffer, die Baugruppe II eine Perforiereinheit, die Baugruppe III einen Schlaufenpuffer, die Baugruppe IV eine Abreißeinheit, die Baugruppe V einen Flascheneinteiler und die Baugruppe VI eine Transporteinheit.

In der Etikettenbevorratungseinheit I sind exemplarisch eine erste Vorratsrolle 901 mit einem ersten Schrumpffolienschlauch und eine zweite Vorratsrolle 902 mit einem zweiten Schrumpffolienschlauch als Bevorratungseinheiten dargestellt. Die erste Rolle 901 kann über einen ersten Antrieb 964 mit Motor M8 angetrieben, während die zweite Rolle 902 über einen zweiten Antrieb 963 mit Motor M7 angetrieben werden kann. Tastelemente 961 und 962 erfassen, wie viel Restfolie auf der jeweiligen Rolle vorhanden ist.

Von den Vorratsrollen wird zunächst einer der Schrumpffolienschläuche über Umlenkrollen 903 an einem Sensor 904 und einer Verklebeeinheit 905 vorbei zu dem unten beschriebenen Schlaufenpuffer geführt. Wenn der Schrumpffolienschlauch, beispielsweise der Vorratsrolle 901, aufgebraucht ist, kann das Ende des aufgebrauchten Schrumpffolienschlauchs mittels der Verklebeeinheit 905 an den Anfang des nächsten Schrumpffolienschlauchs, also der Vorratsrolle 902 geklebt werden, um einen kontinuierlichen Betrieb des Schrumpffolienhülsenaggregats zu ermöglichen. Dazu kann das Ende des aufgebrauchten Schlauchs manuell oder automatisch an den Anfang des nächsten Schlauchs geklebt bzw. gespleißt werden. Ein Beispiel für ein automatisches Verkleben ist in der EP 2062721 B1 gezeigt. Der nachstehend beschriebene Schlaufenpuffer ermöglicht es, das Schrumpffolienhülsenaggregat ohne Unterbrechung zu betreiben. Der somit endlose Schrumpffolienschlauch wird über Umlenkrollen 908 weiter zu einem ersten Schlaufenpuffer gefördert.

Alternativ zu dem ersten Antrieb 964 mit Motor M8 und dem zweiten Antrieb 963 mit Motor M7 kann das Abrollen der bevorrateten Schrumpffolienschläuche auch mittels einer mit einem Motor M1 angetriebenen Antriebsrolle 906 und einer gefederten Gegenrolle 907 erfolgen, die der Verklebeeinheit 905 nachgeschaltet sind.

Der erste Schlaufenpuffer besteht aus einer Vielzahl nebeneinander angeordneter fester und verschiebbarer Rollen, wobei die Vielzahl der verschiebbaren Rollen 909 in der Figur 5 in der Arbeitsposition des Schlaufenpuffers darstellt ist. Durch Bewegen der verschiebbaren Rollen 909 relativ zu den festen Rollen lässt sich eine Pufferfunktion des Schlaufenpuffers realisieren. Dabei weist der Schlaufenpuffer einen Sensor 910 zum Erfassen einer Endlage mit maximaler Verschiebung der verschiebbaren Rollen, einen Sensor 911 zum Erfassen einer Arbeitsposition und/oder einen Sensor 912 zum Erfassen eines Abstands der verschiebbaren Rollen von den festen Rollen, beispielsweise mittels Laser, auf.

Anschließend wird der Schrumpffolienschlauch über Umlenkrollen 913 und 914 und/oder ein Führungsrohr 914 mit Luftbohrungen zur Stabilisierung des Schrumpffolienschlauchs einer manuellen oder automatischen Spurregeleinheit 915 zum Regeln der Spur des geförderten Schrumpffolienschlauchs zugeführt.

Ein Führungselement 916, beispielsweise als Stopper ausgebildet, führt den Schrumpffolienschlauch zum Eingang der Perforiereinheit II. Mittels Umlenkrollen 917 wird der noch nicht perforierte Schrumpffolienschlauch einem Perforierwerk zugeführt, welches eine Gegenwalze 918 und eine Perforierwalze 919 umfasst. Die Gegenwalze 918 kann beispielsweise mit glatter Oberfläche oder als Riffelwalze ausgebildet sein. Die Perforierwalze 919 kann eine Vielzahl von entlang der Längsachse der Perforierwalze angeordneten Perforierklingen mit je einer Vielzahl von scharfen Zähnen zum Perforieren des Schrumpffolienschlauchs aufweisen, die in Eingriff mit der Gegenwalze gebracht werden können. Dazu sind die Perforierklingen in regelmäßigen Abständen entlang des Umfangs der Perforierwalze 919 angeordnet. Die Perforierwalze 919 und/oder die Gegenwalze 918 können, beispielsweise mittels Zahnriemen und Antrieb 920 mit Servomotor M2, gesteuert angetrieben werden, um den Schrumpffolienschlauch in regelmäßigen, vorbestimmten Abständen zu perforieren.

Über eine mittels Motor M3 angetriebene Umlenkwalze 921 und eine gefederte Gegenwalze 922 wird der perforierte Schrumpffolienschlauch, vorbei an einem Schnittmarkensensor 923 zum Erfassen einer vorhandenen Schnittmarke am Schrumpffolienschlauch, einem zweiten Schlaufenpuffer III zugeführt. Mittels der erfassten Schnittmarke wird die vorgeordnete Perforiereinheit über eine nicht dargestellte Steuerung angesteuert. Der Schnittmarkensensor 923 kann optional auch dem Perforierwerk oder der Perforiereinheit II vorgeordnet sein.

Auch der zweite Schlaufenpuffer umfasst eine Vielzahl von feststehenden Rollen 925 und eine Vielzahl von beweglichen Rollen 924, mittels derer die Länge des im Schlaufenpuffer geförderten Schrumpffolienschlauchs variiert werden kann. In der hier dargestellten Ausführung sind die Rollen jedoch übereinander angeordnet. Auch hier kann es einen Sensor 934 für die Arbeitsposition des Schlaufenpuffers und/oder einen Abstandssensor 933 zur Positionserfassung der beweglichen Rollen 924 geben.

Über eine weitere Umlenkrolle 926 wird der perforierte Schrumpffolienschlauch schließlich der Abreißeinheit IV zum Abreißen und Ausschießen einzelner Schrumpffolienhülsen zugeführt. Es soll erneut betont werden, dass die hier dargestellte, exemplarische Ausführung durch die oben beschriebenen und in den folgenden Figuren dargestellten Weiterbildungen gemäß der vorliegenden Erfindung zu ersetzen ist. Die hier dargestellte Anordnung dient lediglich der Verdeutlichung der relativen Positionierung einer Abreißeinheit in einem Schrumpffolienhülsenaggregat.

In der hier dargestellten, nicht repräsentativen Ausführung weist die Abreißeinheit IV einen Auffaltdorn 927 als Auffalteinrichtung auf, über die der perforierte Schrumpffolienschlauch gezogen wird. Ein Paar von Förderrollen 928, die mit einem Servomotor M4 angetrieben werden, fördern den über den Auffaltdorn 927 gezogenen Schrumpffolienschlauch entlang dessen Axialrichtung. Am unteren Ende des Auffaltdorns werden Schrumpffolienhülsen 931 mittels Abreiß- bzw. Spenderollen 930, die über einen Servomotor M5 angetrieben werden, von dem Schrumpffolienschlauch abgerissen und auf den zu etikettierenden Behälter 932, hier als Flasche dargestellt, aufgeschossen. Ein Sensor 929 zum Erkennen der Abrisskante der abzutrennenden Schrumpffolienhülse kann zwischen Förderrollen 928 und Abreißrollen 930 angeordnet sein, um Signale für eine Regelung der Antriebe M4 und M5 zu liefern.

Die Behälter 932 werden der Etikettierstation im Bereich der Abreißeinheit IV über eine Einteileinrichtung V und mittels der Transporteinrichtung VI zugeführt. Dazu wird eine Einteilschnecke 945 mittels eines Antriebs 946 mit einem Motor M9 steuerbar angetrieben.

Gleichzeitig werden die Behälter 932 mit einem Transportband, das über einen Antrieb 947 mit regelbarem Motor M6 angetrieben wird, gefördert, so dass sich eine Transportrichtung 940 für die mit einer gewünschten Teilung versehenen Behälter 932 im Bereich der Etikettierstation ergibt. Das Transportband kann die mit einer Schrumpffolienhülse 939 versehenen Behälter anschließend weiter zu einer Schrumpfeinrichtung, beispielsweise einem Schrumpftunnel, transportieren. Ein der Abreißeinheit IV entlang des Transportbands vorgeschalteter Sensor 941 dient dem Erfassen der Behälter 932, um die Motoren M4, M5, M6 und M9 derart zu steuern und/oder zu regeln, dass die abgetrennten Schrumpffolienhülsen zuverlässig auf die Behälter aufgebracht werden können.

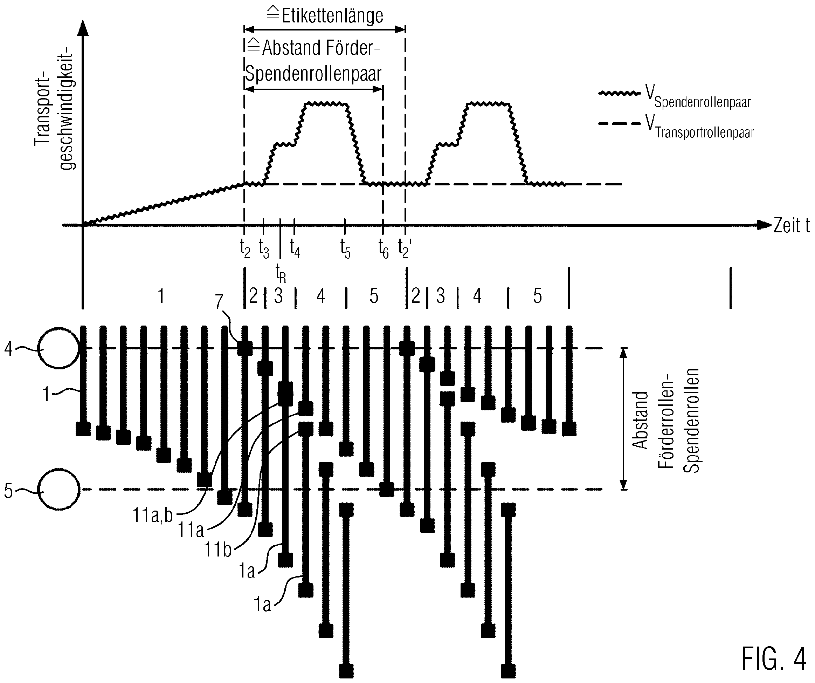

Fig. 1 zeigt vereinfacht und grob schematisch zur besseren Verdeutlichung einiger Aspekten der Erfindung eine nicht erfindungsgemäße Vorrichtung, die im Wesentlichen der Fig. 4 entspricht.

Die Vorrichtung dient zum Aufbringen einer Schrumpffolienhülse auf ein Behältnis 9, wobei die Schrumpffolienhülse zunächst als flach zusammengefaltete, schlauchförmige Schrumpffolienhülse 1 vorliegt und über eine nicht näher dargestellte Fördereinrichtung, beispielsweise mittels Rollen etc., von einer Etikettenbevorratung mit Puffereinrichtung, antransportiert wird. Das Material der Schrumpffolienhülse ist beispielsweise PET, OPS oder PVC und hat eine Stärke von z.B. 10 - 100 µm, vorzugsweise 15 - 60 µm.

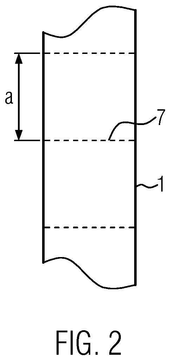

Die Vorrichtung weist eine Perforiereinheit 2 auf, die wie in Fig. 2 angedeutet ist, in vorbestimmten Abständen a, quer zu einer Transportrichtung T bzw. zur Längsrichtung der endlosen schlauchförmigen Schrumpffolienhülse eine Perforierung ausbildet. Hier ist die Perforiereinrichtung 2 als rotatives Perforierwerk 2 ausgebildet, mit mehreren nebeneinander angeordneten (senkrecht zur Bildebene in Fig. 1) angeordneten Vorsprüngen 2a, die die Schrumpffolienhülse 1 durchlöchern. (Lochabstand z.B. 0,5 oder 0,75 mm. Dabei läuft die Schrumpffolienhülse beispielsweise über die angetriebene Rolle 8. Fig.1 ist eine vereinfachte Skizze, nach der Perforationseinrichtung kann noch eine nachgeordnete Puffereinrichtung vorgesehen sein. Weiter kann die Perforiereinrichtung so ausgelegt sein, dass eine weitere Perforation als Aufreißhilfe ausgebildet wird.

Die flach zusammengefaltete Schrumpffolienhülse wird dann in Richtung der Auffalteinrichtung 3, hier des Auffaltdorns 3, transportiert. Der Auffaltdorn 3 weist die Spitze 3a auf, über den die Schrumpffolienhülse in Transportrichtung T, sprich in Axialrichtung des Auffaltdorns, gezogen wird und sich dabei in Radialrichtung aufweitet. Die Schrumpffolienhülse wird dabei von einem Förderrollenpaar 4a,b in Transportrichtung befördert. Das Förderrollenpaar ist auf gegenüberliegenden Seiten des Auffaltdorns 3 angeordnet, derart, dass die Schrumpffolienhülse 1 gegen den Auffaltdorn gedrückt und über die Rollen 4a,b in Transportrichtung T transportiert werden kann. Die Rollen 4a,b drehen sich um entsprechende Achsen A1, die hier senkrecht zur Längsachse L des Auffaltdorns verlaufen. Das Förderrollenpaar 4a,b wird beispielsweise über einen Servoantrieb bzw. Servomotor mit einer bestimmten Transportgeschwindigkeit, hier Umlaufgeschwindigkeit der Rollen, angetrieben. In Transportrichtung T nach dem Transportrollenpaar 4a,b ist ein Spenderollenpaar 5a,b angeordnet, das sich ebenso um entsprechende Achsen A2 senkrecht zur Längsachse L der Auffalteinrichtung 3 dreht bzw. über einen entsprechenden Servoantrieb bzw. Servomotor angetrieben wird. Eine Steuereinrichtung 6 steuert die Transportgeschwindigkeiten des Förderrollenpaars 4a,b und des Spenderollenpaars 5a,b. Der Abstand der Rollen hängt von der jeweiligen Anwendung bzw. Etikettenlänge ab und ist über eine nicht dargestellte Einrichtung veränderbar. Der Abstand a ist beispielsweise bei einem Etikett mit einer Länge von 150 mm z.B. 160 mm (in der Regel ist der Abstand gleich oder etwas größer als die Etikettenlänge). Weiter kann die Steuereinrichtung 6 auch die Geschwindigkeiten der weiteren Fördermittel, z.B. Rolle 8 bzw. Perforierwerk 2, steuern und aneinander anpassen. Unterhalb des beschriebenen Aggregats ist eine Fördereinrichtung 10 für Behältnisse 9, z.B. Flaschen, Dosen etc. angeordnet, auf der die Behältnisse insbesondere linear gefördert werden, wie durch den Pfeil P dargestellt ist. Im Anschluss an die Fördereinrichtung ist eine Einrichtung 12 zum thermischen Ausschrumpfen der abgetrennten Schrumpffolienhülsen 1a auf das Behältnis 9 vorgesehen, die allgemein bekannt ist und daher nicht näher beschrieben wird. Es kann insbesondere auch ein Dampftunnel mit 70 -110 °C vorgesehen sein.

Der Durchmesser des Förderrollenpaars kann dem Durchmesser des Spenderollenpaars entsprechen. Bei abweichenden Durchmessern ist die Drehzahl der entsprechenden Rollen an den jeweiligen Durchmesser anzupassen, um eine bestimmte Umlaufgeschwindigkeit bzw. Transportgeschwindigkeit zu erhalten. Der Durchmesser der Rollen 4a,b, 5a,b liegt z.B. in einem Bereich von 25 bis 75 mm.

Das Transportrollenpaar 4a,b hat die Aufgabe, die Schrumpffolienhülse 1 über den Auffaltdorn 3 zu ziehen und in Axialrichtung zu fördern und zum Abreißen der Hülse gegenzuhalten. Das Spenderollenpaar 5a,b hat die Funktion, die Schrumpffolienhülse an der Perforierung 7 abzureißen und die abgetrennte Schrumpffolienhülse auf das Behältnis 9 abzuschießen.

Einzelne Aspekte des erfindungsgemäßen Verfahrens werden nachfolgend unter Bezunahme der Fig. 1, 3 und 4 näher erläutert.

Zunächst wird die schlauchförmige, noch zusammengefaltete Schrumpffolienhülse 1 über ein nicht dargestelltes Transportsystem antransportiert. Dabei läuft das Förderrollenpaar 4a,b mit einer vorbestimmten Fördergeschwindigkeit V_{Förder} von beispielsweise 0,1 bis 5 m/s, wobei die Geschwindigkeit an die Etikettenlänge angepasst werden kann. Die zusammengefaltete Schrumpffolienhülse wird nun mittels der Perforiereinrichtung 2, wie in Fig. 2 dargestellt, perforiert, derart dass die Perforierungen 7, die aufeinanderfolgen, einen Abstand a aufweisen, der der Länge a einer abgetrennten Schrumpffolienhülse 1a, d.h. eines bestimmten Etiketts etc., aufweist. Die Perforiereinrichtung wird entsprechend angesteuert. Es gibt z.B. 2 Möglichkeiten, das Perforierwerk zu steuern:
1. Auf dem Perforierrotor 2 sitzt ein Servomotor. Der beschleunigt das Messer 2a während des Schnitts auf Synchrongeschwindigkeit zur Transportgeschwindigkeit der Hülse 2 - nach dem Schnitt bremst es ab oder beschleunigt und bringt das nächste Messer 2a in Vorbereitung zum nächsten Schnitt. Ist der nächste Schnitt fällig, geht der Servomotor wieder auf Synchrongeschwindigkeit und schneidet bzw. perforiert.
2. Der Rotor 2 läuft mit einer mittleren Geschwindigkeit, die so gewählt ist, dass während ein Etikett um eine Etikettenlänge durch das Perforierwerk gefördert wird, der Rotor 2 genau so schnell ist, dass er sich von einem Messer 2 zum nächsten bewegt. Hier ist zwar die Rotorgeschwindigkeit und die Etikettengeschwindigkeit während des Schnitts nicht synchron, was aber keinen negativen Einfluß auf die Perforierung aufweist. Die Motorauslastung des Servos ist wesentlich geringer, da der Motor nicht ständig geregelt werden muss, so dass insgesamt eine schnellere Transportgeschwindigkeit der Etiketten und somit ein größerer Durchsatz möglich ist. Dabei wird die Schrumpffolienhülse kontinuierlich weiter gefördert. Es ist auch möglich, dass das Perforieren nicht in dem entsprechenden Aggregat erfolgt, sondern die Folie vorab perforiert wurde.

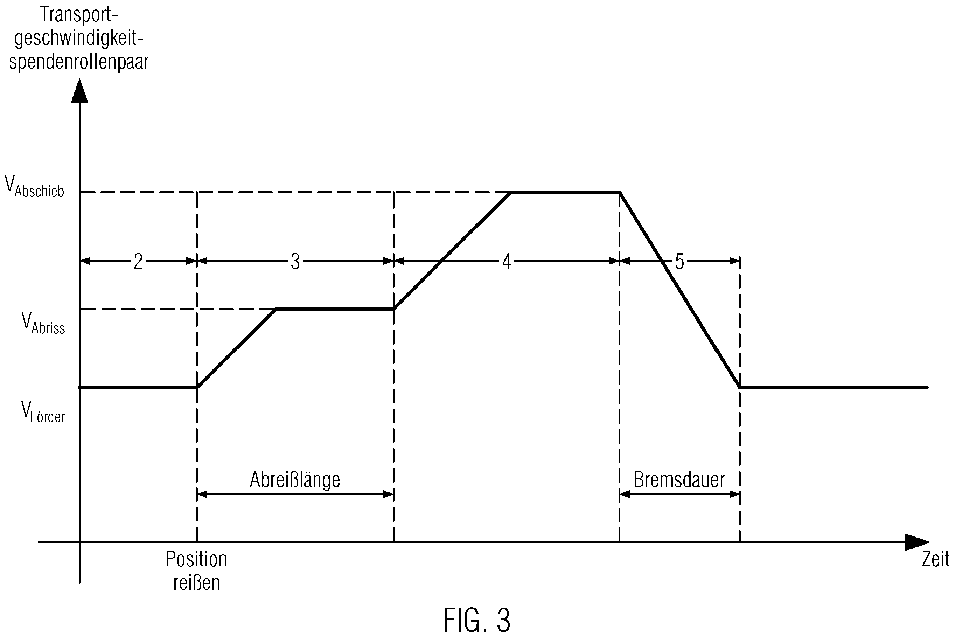

Die Schrumpffolienhülse wird dann mittels Auffaltdorn 3 in Radialrichtung aufgefaltet, wobei das Förderrollenpaar 4a,b die Schrumpffolienhülse 1 mit der vorbestimmten Fördergeschwindigkeit V_{Förder} transportiert. Die Schrumpffolienhülse 1 wird mit Hilfe des Förderrollenpaars 4a,b zum Spendenrollenpaar 5a,b hin gefördert, wobei hier in der Phase 2, wie aus Fig. 3 hervorgeht, die Fördergeschwindigkeit V_{Förder} des Transportrollenpaars 4a,b der Fördergeschwindigkeit des Spenderollenpaars 5a,b entspricht. Nachdem die Schrumpffolienhülse einige Millimeter (z.B. 5-20 mm) in das Spenderollenpaar 5a,b eingetaucht ist, bzw. von dem Spenderollenpaar 5a,b ergriffen wurde, wird die Transportgeschwindigkeit des Spenderollenpaars 5a,b, wie insbesondere aus Fig. 3 hervorgeht, auf eine Transportgeschwindigkeit V_{Abreiß} beschleunigt, während die Geschwindigkeit des Förderrollenpaars 4a,b konstant auf V_{Förder} bleibt. Aufgrund der Zugkräfte, die auf die Perforierung 7 wirken, reißt die Schrumpffolienhülse 1 an der Perforierung 7 ab, derart, dass Abrisskanten 11a,b, wie aus Fig. 1 hervorgeht, entstehen, wobei die Abrisskanten 11a,b auseinandergezogen werden (Phase 3).

Im Anschluss an Phase 3 erfolgt die Phase 4, in der die Transportgeschwindigkeit der Spenderollen 5a,b weiter auf eine Abschießgeschwindigkeit V_{Abschieß} beschleunigt wird, wodurch die abgerissene Schrumpffolienhülse 1a auf eine Abschussgeschwindigkeit beschleunigt und auf das Behältnis 9 abgeschossen wird.

In einer Phase 5 wird das Spenderollenpaar wieder auf die Fördergeschwindigkeit V_{Förder} des Förderrollenpaars 4a,b gebremst (Phase 5), wobei bereits erneut die Schrumpffolienhülse 1 durch das Förderrollenpaar 4a,b zu dem Spenderollenpaar 5a,b gefördert wird.

Es ist auch möglich, dass zwischen Phase 3 und 4 die abgerissene Schrumpffolienhülse mit der nachfolgenden Schrumpffolienhülse synchron transportiert wird, indem das Spenderollenpaar 5a,b vor dem Beschleunigen auf Abschießgeschwindigkeit V_{Abschieß}, auf die Fördergeschwindigkeit des Förderrollenpaars 4a,b V_{Förder} abgebremst wird.

Die Geschwindigkeit V_{Abreiß} ist größer als die Fördergeschwindigkeit V_{Förder}. Es reicht bereits eine relativ kleine Geschwindigkeitsdifferenz aus, d.h. V_{Abreiß} ist z.B. mindestens 1,04 mal größer als V_{Förder}. Die exakte Geschwindigkeit V_{Abreiß} hängt von den entsprechenden Parametern wie Abstand der Förder- und Spenderollen, Etikettenlänge, V_{Förder} und Material der Hülse ab. Beispielsweise beträgt die Geschwindigkeit V_{Förder} der Förderrollen bei einer Länge der abgetrennten Folienhülse 1a bzw. Sleevelänge von 150 mm und einem Abstand zwischen Förder- und Spenderolle von 160 mm 2,92 m/s (bei den oben genannten Materialen). Die Abreißgeschwindigkeit V_{Abreiß} beträgt dann beispielsweise 3,11 m/s. Die Geschwindigkeit V_{Abschieß} kann bis zum zehnfachen von V_{Förder} betragen.

Die Phasen 2 bis 5 werden kontinuierlich wiederholt. Bei diesem Ausführungsbeispiel bleibt die Geschwindigkeit des Förderrollenpaars 4a,b stets konstant.

Fig. 4 zeigt das erfindungsgemäße Verfahren nochmals im Detail. Wie bei der Fig. 3 ist ebenfalls die Transportgeschwindigkeit V gegen die Zeit t aufgetragen. Mit der gestrichelten Linie ist die Geschwindigkeit des Transportrollenpaars 4a,b gezeigt. Die gepunktete Linie zeigt die Geschwindigkeit des Spenderollenpaars 5a,b. Vor den Phasen 2 bis 5 werden die Rollen 5a,b, 4a,b zunächst auf eine vorbestimmte Transportgeschwindigkeit V_{Förder} beschleunigt. Zum Zeitpunkt t2 beginnt die Phase 2, in der, wie zuvor beschrieben, das Förderrollenpaar 4a,b und Spenderollenpaar 5a,b mit gleicher Transportgeschwindigkeit betrieben werden. Unterhalb des Diagramms ist schematisch der Transport der Schrumpffolienhülse 1 zwischen den Rollen 4 und 5 gezeigt. Zum Zeitpunkt t2 läuft hier beispielsweise eine Perforierung 7 in den Bereich des Transportrollenpaars 4a,b ein und wird in Richtung Spenderollenpaar 5a,b transportiert. Das Transportrollenpaar 4a,b läuft während der Phasen 2 bis 5 stets mit gleicher Geschwindigkeit. Wie zuvor beschrieben, wird zum Zeitpunkt t3 in der Phase 3 das Spenderollenpaar 5a,b auf die Geschwindigkeit V_{Abriss} beschleunigt, wobei zu einem Zeitpunkt tr die Zugkraft, die auf die Perforierung 7 wirkt, so groß ist, dass die Schrumpffolienhülse auseinandergerissen wird und die Abrisskanten 11a, 11b entstehen und dann weiter auseinandergezogen werden. Zum Zeitpunkt t4 wird die Geschwindigkeit des Spenderollenpaars 5a,b weiter beschleunigt bis zu einer Abschießgeschwindigkeit V_{Abschieß}, wodurch das abgetrennte Etikett 1a abgeschossen wird. Wie zuvor beschrieben, wird dann das Spenderollenpaar 5a,b wieder auf die Transportgeschwindigkeit V_{Förder} gebremst. Zum Zeitpunkt t2' erfolgt dann ein neuer Zyklus, wobei die Anlage so angesteuert wird, dass zum Zeitpunkt t2' sich erneut eine Perforierung 7 in einem Bereich zwischen den Rollen 4a,b befindet. Die Zeitdauer zwischen t2 und t2' (also Phasen 2 bis 5) entspricht einem Zeitraum, der benötigt wird, dass die Schrumpffolienhülse um eine "Etikettenlänge" (d.h. die Länge einer abgetrennten Schrumpffolienhülse 1a mit der Transportgeschwindigkeit V_{Förder} transportiert wird. Der Zeitabschnitt zwischen dem Zeitpunkt t2 und t6 entspricht der Zeitspanne, die notwendig ist, die Schrumpffolienhülse von dem Rollenpaar 4a,b zum Rollenpaar 5a,b zu transportieren, hier die Perforierung 7 von der Rolle 4 zu der Rolle 5. In Phase 5 kann das Förderrollenpaar und das Spenderollenpaar auf Transportgeschwindigkeit V_{Förder} gehalten werden, bis ein neuer Schrumpffolienhülsenabschnitt bzw. abzutrennendes Etikett einläuft, hier mit der Perforierung 7. Dann beginnt erneut die Phase 2.

Fig. 4 ist nur beispielhaft für eine Ansteuerung der Rollenpaare. Wesentlich ist lediglich, dass das Spenderollenpaar 5a,b zum Abreißen und zum Abschießen jeweils auf entsprechende Geschwindigkeiten V_{Abvreiß}, V_{Ausschieß} beschleunigt werden kann, während das Förderrollenpaar 4a,b auf Fördergeschwindigkeit V_{Förder} gehalten werden kann.

Bei den vorherigen Ausführungsformen wurde die Geschwindigkeit des Spenderollenpaars 5a,b variiert.

Es ist aber auch möglich, dass das Transportrollenpaar4a,b, und Spenderollenpaar 5 a,b kontinuierlich mit jeweils konstanter aber zueinander unterschiedlichen Geschwindigkeit angetrieben werden. Die Transportgeschwindigkeit des Spenderollenpaars ist dann etwa 2-10-mal größer als die Transportgeschwindigkeit des Förderrollenpaars. Kein Stopp ist nötig. Dadurch kann die Motorauslastung wesentlich (z.B. von 125% auf 30 %) reduziert werden. Auch hier haben die Spenderollen sowohl eine Abreißfunktion als auch eine Abschießfunktion. Der Abstand zwischen den Transportrollenpaar 4a,b, und Spenderollenpaar 5a,b muss dabei größer als der Abstand a zwischen zwei Perforierungen 7 gewählt werden.

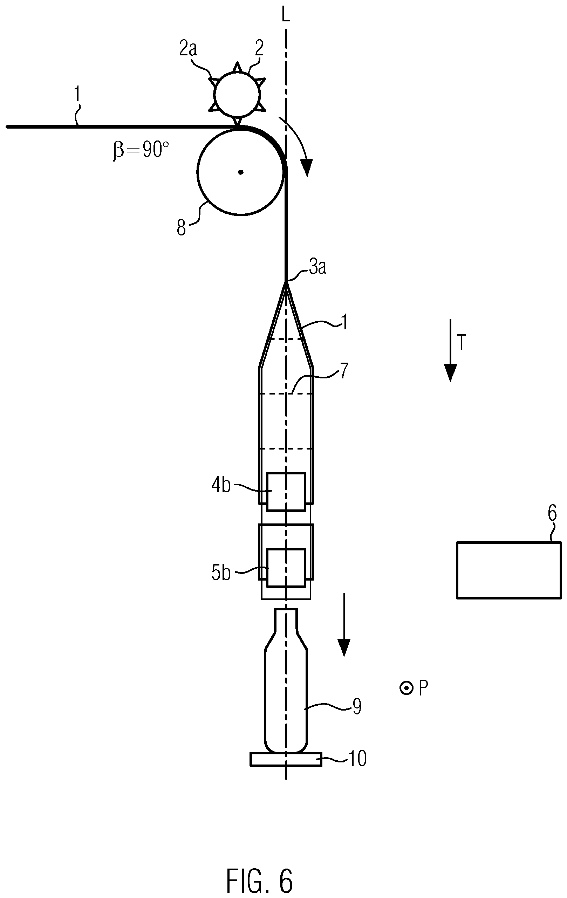

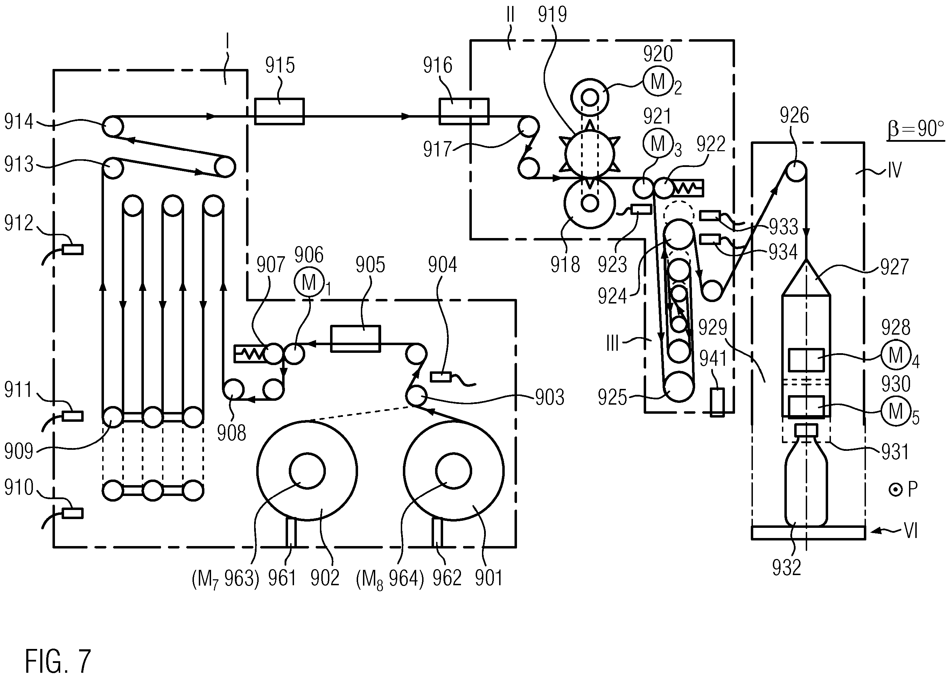

Das in Figur 6 gezeigte Beispiel entspricht dem in Figur 1 gezeigten Beispiel, wobei jedoch der Winkel β, unter dem die flach gefaltete Schrumpffolienhülse 1 der Auffalteinrichtung 3, hier dem Auffaltdorn zugeführt wird, um 90° versetzt ist. Wie aus Figur 6a hervorgeht, verläuft hier die Transportrichtung P in die Bildebene hinein. Die flache Seite der zugeführten Schrumpffolienhülse verläuft also, wie sich aus Figur 6 ergibt, parallel zu der Transportrichtung P, d.h. der Winkel β, unter dem die flache Seite der Schrumpffolienhülse zur Transportrichtung P ausgerichtet ist, ist hier 0. Entsprechendes gilt für die Figur 7. Figur 7 entspricht der Figur 5, wobei jedoch auch hier, wie zuvor erläutert, der Winkel β 0 ist.

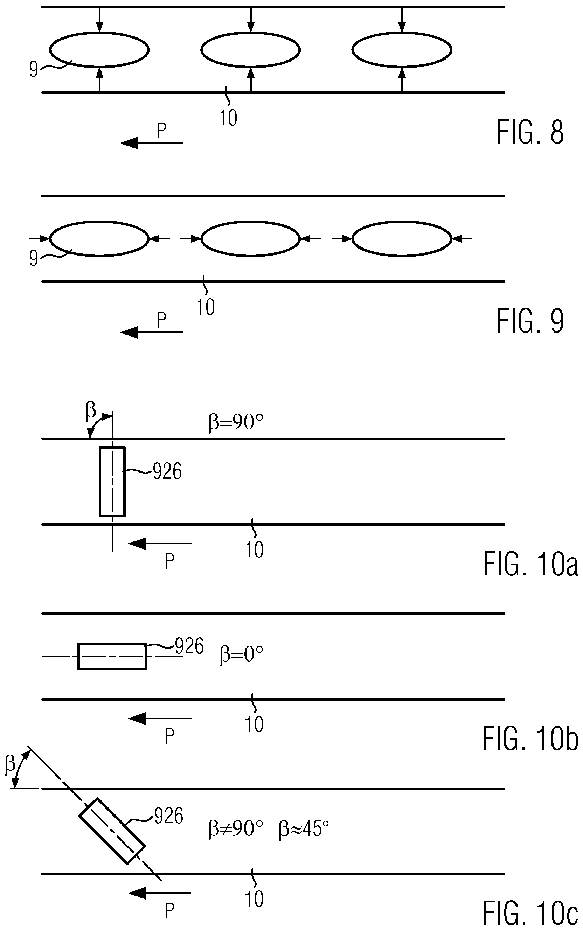

Wie aus Figur 8 hervorgeht, eignet sich die Zuführung für die gefalteten Schrumpffolienhülsen, wie sie in Figuren 1 und 5 gezeigt ist, nicht für Formflaschen, beispielsweise mit länglichem Querschnitt. Bei einer entsprechenden Zuführung von β = 90° würden sich nämlich, wie man durch die Pfeile in Figur 8 erkennen kann, die Faltkanten der Schrumpffolienhülse an der Vorderseite einer Flasche befinden, was als störend wahrgenommen werden würde. Wenn jedoch die Schrumpffolienhülse über eine entsprechende Zuführeinrichtung 8, 926 so zugeführt wird, dass sich die flache Seite in Transportrichtung P, d.h. in Richtung des Linearförderers erstreckt, können die Faltkanten in den seitlichen Bereichen angeordnet sein, wo sie weniger störend wahrgenommen werden.

Figur 10a zeigt beispielsweise die Ausrichtung einer Zuführeinrichtung relativ zur Fördereinrichtung 10. Die Zuführeinrichtung kann beispielsweise eine Förder- oder Umlenkrolle sein, beispielsweise die Rolle 8 in der Figur 1 oder die Rolle 926 in Figur 5. Die Rolle ist oberhalb der Auffalteinrichtung so angeordnet, dass der Folienschlauch direkt der Spitze 3a der Auffalteinrichtung zugeführt werden kann. In Figur 10a steht die Zuführeinrichtung 926, 8 senkrecht zur Fördereinrichtung 10 bzw. der Förderrichtung P. Eine entsprechende Ausrichtung entspricht den Figuren 1 und 5. Hier ist der Winkel β 90°. Der Winkel β kann jedoch variiert werden. Figur 10b zeigt eine Anordnung, bei der die Zuführeinrichtung parallel zur Fördereinrichtung 10 entsprechend den Figuren 6 und 7 verläuft.

Es ist jedoch auch möglich, dass ein anderer Winkel β gewählt wird z.B. in einem Bereich von 0 bis 90°, d.h., dass die Zuführeinrichtung schräg zur Fördereinrichtung angeordnet ist. So kann die Schrumpffolienhülse, je nach Form des Behälters bzw. der Flasche, der Auffalteinrichtung unter einem bestimmten Winkel β zugeführt werden. Die Schrumpffolienhülse muss nicht im Bereich der Auffalteinrichtung verdreht werden. Somit können die perforierten Etiketten kontrolliert abreißen.

Vorteilhafterweise kann die Ausrichtung der Zuführeinrichtung zur Einstellung des Winkels β verstellt werden. Somit können mit ein und derselben Anlage Behältnisse mit unterschiedlicher Form mit Etiketten versehen werden. Zum Verstellen der Zuführeinrichtung kann die Zuführeinrichtung unabhängig von der Auffalteinrichtung verstellbar angeordnet sein. Das heißt, dass dann beispielsweise ein entsprechendes Zuführmodul zur Auffalteinrichtung verschwenkt oder mechanisch verstellt werden kann. Das Modul kann z.B.auch die Baugruppen I bis III umfassen, sowie die Rolle über der Auffalteinrichtung. So kann der gefaltete Folienschlauch bereits unter einen entsprechenden Winkel über eine Vorratseinrichtung der gesamten Vorrichtung zugeführt werden.

## Patentansprüche

1. Verfahren zum Aufbringen einer Schrumpffolienhülse (1) auf ein Behältnis (9) mit folgenden Schritten:
a) Perforieren der Schrumpffolienhülse (1) in vorbestimmten Abständen mittels einer Perforiereinrichtung (2),
b) Auffalten der perforierten Schrumpffolienhülse (1) mittels Auffalteinrichtung, insbesondere Auffaltdorn (3),
c) Transportieren der aufgefalteten Schrumpffolienhülse (1) entlang der Auffalteinrichtung (3) mit einem Förderrollenpaar (4a, b),
d) Abreißen der Schrumpffolienhülse (1) an der Perforierung (7) mit einem nachgeordneten Spenderollenpaar (5a, b), dessen Transportgeschwindigkeit (V_{Abreiß}) zumindest zeitweise größer ist als die Transportgeschwindigkeit (V_{Förder}) des Förderrollenpaars (4a, b) und
e) Abschießen der abgetrennten Schrumpffolienhülse (1a) auf das Behältnis (9), wobei
vor Schritt b) die perforierte Schrumpffolienhülse (1) einer Puffereinrichtung (III) zugeführt wird, **dadurch gekennzeichnet, dass** das Abschießen durch das Spenderollenpaar (5a, b) erfolgt, und dass die Puffereinrichtung (III) der Perforiereinrichtung nachgeordnet ist.

2. Verfahren nach Anspruch 1, **dadurch gekennzeichnet, dass** als Material für die Schrumpffolie PET, OPS oder PVC verwendet wird und die Stärke der Folie insbesondere in einem Bereich von 10 - 100 µm, insbesondere 15 - 60 µm liegt.

3. Verfahren nach mindestens einem der vorhergehenden Ansprüche, **dadurch gekennzeichnet, dass** zum Abschießen der abgetrennten Schrumpffolienhülse (1a) auf das Behältnis (9) das Spenderollenpaar (5a, b) auf eine Transportgeschwindigkeit (V_{Abschieß}) beschleunigt wird, die größer ist als die Transportgeschwindigkeit (V_{Abreiß}) zum Abreißen,
oder
das Spenderollenpaar (5a, b) zum Abschießen eine Transportgeschwindigkeit V_{Abschieß} aufweist, die der Transportgeschwindigkeit (V_{Abreiß}) entspricht.

4. Verfahren nach mindestens einem der Ansprüche 1 bis 3, **dadurch gekennzeichnet, dass** bei den Schritten c) bis e), nachdem vorab das Förderrollenpaar (4a, b) und Spenderollenpaar (5a, b) auf eine vorbestimmte Transportgeschwindigkeit beschleunigt wurden (Phase 1), folgende Phasen durchlaufen werden:
- das Förderrollenpaar (4a, b) und Spenderollenpaar (5a, b) laufen mit gleicher Transportgeschwindigkeit (V_{Förder}), wobei die Schrumpffolienhülse (1) durch das Förderrollenpaar (4a, b) zum Spenderollenpaar (5a, b) transportiert wird (Phase 2),
- die Transportgeschwindigkeit des Spenderollenpaars (5a, b) wird auf eine Geschwindigkeit (V_{Abreiss}) erhöht, wodurch die Schrumpffolienhülse (1) an der Perforierung (7) abgerissen und die Abrisskanten (11a, b) auseinandergezogen werden (Phase 3),
- das Spenderollenpaar (5a, b) wird auf eine Transportgeschwindigkeit (V_{Abschieß}) beschleunigt, die vorzugsweise größer ist als die Geschwindigkeit zum Abreißen (V_{Abreiß}), wodurch die abgetrennte Schrumpffolienhülse (1a) beschleunigt und abgeschossen wird (Phase 4), und
- das Spenderollenpaar (5a, b) wird auf die Transportgeschwindigkeit des Transportrollenpaars (4a, b) (V_{Förder}) abgebremst (Phase 5).

5. Verfahren nach Anspruch 4, **dadurch gekennzeichnet, dass** zwischen Phase 3 und 4 in einer Phase 3a das Spenderollenpaar (5a, b) auf die Transportgeschwindigkeit des Transportrollenpaars (V_{Förder}) abgebremst wird, damit die abgerissene Schrumpffolienhülse (1a) synchron zur nachfolgenden Schrumpffolienhülse (1) transportiert wird, und erst dann auf die Transportgeschwindigkeit (V_{Abschieß}) beschleunigt wird.

6. Verfahren nach mindestens einem der Ansprüche 1 bis 5, **dadurch gekennzeichnet, dass** die Phasen 2 bis 5 kontinuierlich wiederholt werden.

7. Verfahren nach mindestens einem der Ansprüche 1 bis 6, **dadurch gekennzeichnet, dass** die Transportgeschwindigkeit (V_{Förder}) des Förderrollenpaars (4a, b) insbesondere während der Phasen 2 bis 5 konstant ist.

8. Verfahren nach mindestens einem der Ansprüche 1 bis 7, **dadurch gekennzeichnet, dass** zumindest das Spenderollenpaar (5a, b) über einen Servoantrieb angetrieben wird.

9. Verfahren nach mindestens einem der Ansprüche 1 bis 8, **dadurch gekennzeichnet, dass** das Behältnis (9) unterhalb der Auffalteinrichtung (3) mit einer Fördereinrichtung (10) in eine Förderrichtung (P) gefördert wird und die flach zusammengefaltete Schrumpffolienhülse (1) der Auffalteinrichtung (3) derart zugeführt wird, dass sich die flache Seite der Schrumpffolienhülse unter einem Winkel β von 0 bis <90°, vorzugsweise 0° zur Förderrichtung (P) erstreckt.

10. Verfahren nach mindestens einem der Ansprüche 1 - 9, **dadurch gekennzeichnet, dass** das Förderrollenpaar (4a, b) und Spenderollenpaar (5a, b) kontinuierlich mit jeweils konstanter Geschwindigkeit angetrieben werden, wobei vorteilhafterweise die Transportgeschwindigkeit des Spenderollenpaars bis zu 10 Mal größer, vorzugsweise 2-10 Mal größer als die Transportgeschwindigkeit des Förderrollenpaars (4a, b) ist.

11. Vorrichtung zum Durchführen des Verfahrens nach mindestens einem der Ansprüche 1 bis 9 mit
- einer Auffalteinrichtung, insbesondere einem Auffaltdorn (3) zum Auffalten einer perforierten Schrumpffolienhülse (1),
- einem ersten Förderrollenpaar (4a, b) zum Transportieren der aufgefalteten Schrumpffolienhülse (1) entlang der Auffalteinrichtung (3),
- einem nachgeordneten Spenderollenpaar (5a, b) zum Abreißen der Schrumpffolienhülse (1) an der Perforierung (7),
- einer Steuerung (6), die zum Abreißen der Schrumpffolienhülse (1) einen Antrieb des Spenderollenpaars (5a, b) derart ansteuert, dass die Transportgeschwindigkeit (V_{Abreiß}) des Spenderollenpaars (5a,b) zumindest zeitweise größer ist als die Transportgeschwindigkeit (V_{Förder}) des Förderrollenpaars (4a,b), wobei die Steuerung (6) zum Ausschießen der abgetrennten Schrumpffolienhülse (1) den Antrieb des Spenderollenpaars derart ansteuert, dass die Transportgeschwindigkeit (V_{Abschieß}) des Spenderollenpaars (5a,b) größer ist als die Transportgeschwindigkeit (V_{Abreiß}) zum Abreißen der Schrumpffolienhülse (1)
oder das Spenderollenpaar (5a, b) zum Abschießen eine Transportgeschwindigkeit (V_{Abschieß}) aufweist, die der Transportgeschwindigkeit (V_{Abreiß}) entspricht, wobei die Vorrichtung weiter eine Perforiereinrichtung (2) zum Perforieren einer Schrumpffolienhülse (1) in vorbestimmten Abständen (a) aufweist, und eine der Perforiereinrichtung nachgeordnete Puffereinrichtung (III).

12. Vorrichtung nach Anspruch 10, **dadurch gekennzeichnet, dass** zumindest das Spenderollenpaar (5a, b) mittels Servoantrieb angetrieben wird.

13. Vorrichtung nach mindestens einem der Ansprüche 11 - 12, **dadurch gekennzeichnet, dass** der Abstand zwischen Förderrollenpaar (4a, b) und Spenderollenpaar (5a, b) über eine Verstelleinrichtung verstellbar ist.

14. Vorrichtung nach mindestens einem der Ansprüche 11 - 13, **dadurch gekennzeichnet, dass** die Vorrichtung eine Fördereinrichtung (10) umfasst, die unterhalb der Auffalteinrichtung (3) angeordnet ist und die das Behältnis in Förderrichtung (P) fördert, und eine Zuführeinrichtung (8, 926), die derart angeordnet ist, dass die flach zusammengefaltete Schrumpffolienhülse (1) der Auffalteinrichtung (3) derart zugeführt wird, dass sich die flache Seite der Schrumpffolienhülse unter einem Winkel (β) von 0 bis <90°, vorzugsweise 0° zur Förderrichtung (P) erstreckt.

15. Vorrichtung nach mindestens einem der Ansprüche 11 - 14, **dadurch gekennzeichnet, dass** die Zuführeinrichtung (8,926) verstellbar ausgebildet ist um einen Winkel (β) zwischen der flachen Seite der Schrumpffolienhülse (1) und der Förderrichtung (P) der Fördereirichtung (10) in einem Bereich von 0 - 90 ° einzustellen.

## Claims

1. Method for applying a shrink film sleeve (1) to a container (9), with the following steps:
a) perforating the shrink film sleeve (1) at predetermined intervals by means of a perforation device (2),
b) unfolding the perforated shrink film sleeve (1) by means of an unfolding device, in particular an unfolding mandrel (3),
c) transporting the unfolded shrink film sleeve (1) along the unfolding device (3) with a pair of conveyor rollers (4a, b),
d) tearing off the shrink film sleeve (1) at the perforation (7) with a downstream pair of dispensing rollers (5a, b) whose transportation speed (V_{Abreiß}) is at least temporarily greater than the transportation speed (V_{Förder}) of the pair of conveyor rollers (4a, b), and
e) launching the detached shrink film sleeve (1a) onto the container (9),
wherein
prior to step b), the perforated shrink film sleeve (1) is supplied to a buffer device (III), **characterised in that**
the shrink-film sleeve is launched by the pair of dispensing rollers (5a, b), and that the buffer device (III) is arranged downstream of the perforation device.

2. Method according to claim 1, **characterised in that** PET, OPS or PVC is used as the material for the shrink film and the thickness of the film is in particular in a range of 10 - 100 µm, in particular 15 - 60 µm.

3. Method according to at least one of the preceding claims, **characterised in that** for launching the detached shrink film sleeve (1a) onto the container (9), the pair of dispensing rollers (5a, b) is accelerated to a transportation speed (V_{Abschieß}) that is greater than the transportation speed (V_{Abreiß}) for tearing off,
or
for launching, the pair of dispensing rollers (5a, b) has a transportation speed (V_{Abschieß}) that corresponds to the transportation speed (V_{Abreiß}).

4. Method according to at least one of the claims 1 to 3, **characterised in that** after the pair of conveyor rollers (4a, b) and pair of dispensing rollers (5a, b) have been accelerated to a predetermined transportation speed beforehand (phase 1), the following phases are run through in steps c) to e):
- the pair of conveyor rollers (4a, b) and the pair of dispensing rollers (5a, b) run at the same transportation speed (V_{Förder}), wherein the shrink film sleeve (1) is transported by the pair of conveyor rollers (4a, b) to the pair of dispensing rollers (5a, b) (phase 2),
- the transportation speed of the pair of dispensing rollers (5a, b) is increased to a speed (V_{Abreiß}), through which the shrink film sleeve (1) is torn off at the perforation (7) and the tear-off edges (11a, b) are pulled apart (phase 3),
- the pair of dispensing rollers (5a, b) is accelerated to a transportation speed (V_{Abschieß}) that is preferably greater than the speed for tearing off (V_{Abreiß}), through which the detached shrink film sleeve (1a) is accelerated and launched (phase 4), and
- the pair of dispensing rollers (5a, b) is decelerated to the transportation speed of the pair of transportation rollers (4a, b) (V_{Förder}) (phase 5).

5. Method according to claim 4, **characterised in that** between phases 3 and 4, in a phase 3a, the pair of dispensing rollers (5a, b) is decelerated to the transportation speed of the pair of transportation rollers (V_{Förder}), so that the detached shrink film sleeve (1a) is transported synchronously to the subsequent shrink film sleeve (1), and only then is it accelerated to the transportation speed (V_{Abschieß}).

6. Method according to at least one of the claims 1 to 5, **characterised in that** phases 2 to 5 are repeated continuously.

7. Method according to at least one of the claims 1 to 6, **characterised in that** the transportation speed (V_{Förder}) of the pair of conveyor rollers (4a, b) is constant, in particular during phases 2 to 5.

8. Method according to at least one of the claims 1 to 7, **characterised in that** at least the pair of dispensing rollers (5a, b) is driven via a servo drive.

9. Method according to at least one of the claims 1 to 8, **characterised in that** the container (9) is transported with a conveyor device (10) below the unfolding device (3) in a direction of conveyance (P) and the shrink film sleeve (1), which is folded flat, is supplied to the unfolding device (3) in such a way that the flat side of the shrink film sleeve extends at an angle ß of 0 to <90°, preferably 0°, to the direction of conveyance (P).

10. Method according to at least one of the claims 1-9, **characterised in that** the pair of conveyor rollers (4a, b) and the pair of dispensing rollers (5a, b) are driven continuously at a respectively constant speed, wherein advantageously, the transportation speed of the pair of dispensing rollers is up to 10 times greater, preferably 2-10 times greater, than the transportation speed of the pair of conveyor rollers (4a, b).

11. Device for executing the method according to at least one of the claims 1 to 9, with
- an unfolding device, in particular an unfolding mandrel (3), for unfolding a perforated shrink film sleeve (1),
- a first pair of conveyor rollers (4a, b) for transporting the unfolded shrink film sleeve (1) along the unfolding device (3),
- a downstream pair of dispensing rollers (5a, b) for tearing the shrink film sleeve (1) off at the perforation (7),
- a control unit (6) which, for tearing the shrink film sleeve (1) off, actuates a drive for the pair of dispensing rollers (4a, b) in such a way that the transportation speed (V_{Abreiß}) of the pair of dispensing rollers (5a, b) is at least temporarily greater than the transportation speed (V_{Förder}) of the pair of conveyor rollers (4a, b), wherein the control unit (6), for launching the detached shrink film sleeve (1), actuates the drive for the pair of dispensing rollers in such a way that the transportation speed (V_{Abschieß}) of the pair of dispensing rollers (5a, b) is greater than the transportation speed (V_{Abreiß}) for tearing off the shrink film sleeve (1)
or
for launching, the pair of dispensing rollers (5a, b) has a transportation speed (V_{Abschieß}) that corresponds to the transportation speed (V_{Abreiß}), wherein
the device furthermore has a perforation device (2) for perforating a shrink film sleeve (1) at predetermined intervals (a), and a buffer device (III) that is arranged downstream of the perforation device.

12. Device according to claim 10, **characterised in that** at least the pair of dispensing rollers (5a, b) is driven by means of a servo drive.

13. Device according to at least one of the claims 11 - 12, **characterised in that** the distance between the pair of conveyor rollers (4a, b) and the pair of dispensing rollers (5a, b) can be adjusted via an adjustment device.

14. Device according to at least one of the claims 11 - 13, **characterised in that** the device comprises a conveyor device (10) that is arranged below the unfolding device (3) and conveys the container in the direction of conveyance (P), and a feed device (8, 926), that is arranged in such a way that the shrink film sleeve (1) that is folded flat is supplied to the unfolding device (3) in such a way that the flat side of the shrink film sleeve extends at an angle (β) of 0 to <90°, preferably 0°, to the direction of conveyance (P).

15. Device according to at least one of the claims 11- 14, **characterised in that** the feed device (8, 926) is designed to be adjustable around an angle (ß) between the flat side of the shrink film sleeve (1) and the direction of conveyance (P) of the conveyor device (10) in a range of 0 - 90°.

## Revendications

1. Procédé pour appliquer un manchon de film rétractable (1) sur un récipient (9) comprenant les étapes consistant à :
a) perforer le manchon de film rétractable (1) à des intervalles prédéterminés au moyen d'un dispositif de perforation (2),
b) ouvrir le manchon de film rétractable (1) perforée au moyen d'un dispositif d'ouverture, en particulier d'un mandrin d'ouverture (3),
c) transporter le manchon de film rétractable (1) ouvert le long du dispositif d'ouverture (3) à l'aide d'une paire de rouleaux de transport (4a, b),
d) détacher le manchon de film rétractable (1) au niveau de la perforation (7) avec une paire de rouleaux de distribution (5a, b) agencée en aval, dont la vitesse de transport (V_{Abreiß}) est au moins temporairement supérieure à la vitesse de transport (V_{Förder}) de la paire de rouleaux de transport (4a, b), et
e) rabattre le manchon de film rétractable (1a) séparé sur le récipient (9), dans lequel avant l'étape b), le manchon de film rétractable (1) perforée est introduit dans un dispositif tampon (III), **caractérisé en ce que** l'étape consistant à rabattre le manchon est effectué par la paire de rouleaux de distribution (5a, b), et **en ce que**
le dispositif tampon (III) est placé en aval du dispositif de perforation.

2. Procédé selon la revendication 1, **caractérisé en ce** du PET, de l'OPS ou du PVC sont utilisé comme matériau pour le film rétractable et en ce que l'épaisseur du film se situe en particulier dans une plage de 10 à 100 µm, en particulier de 15 à 60 µm.

3. Procédé selon au moins l'une quelconque des revendications précédentes, **caractérisé en ce que**, pour l'étape consistant à rabattre le manchon de film rétractable (1a) séparé sur le récipient (9), la paire de rouleaux de distribution (5a, b) est accélérée à une vitesse de transport (V_{Abschieß}) qui est supérieure à la vitesse de transport (V_{Abreiß}) pour l'étape de détachement,
ou
la paire de rouleaux de distribution (5a, b) présente une vitesse de transport V_{Abschieß} pour l'étape de rabattement qui correspond à la vitesse de transport (V_{Abreiß}).

4. Procédé selon au moins l'une quelconque des revendications 1 à 3, **caractérisé en ce que** lors des étapes c) à e), après que la paire de rouleaux de transport (4a, b) et la paire de rouleaux de distribution (5a, b) aient été accélérées au préalable à une vitesse de transport prédéterminée (phase 1), les phases suivantes surviennent :
- la paire de rouleaux de transport (4a, b) et la paire de rouleaux de distribution (5a, b) fonctionnent à la même vitesse de transport (V_{Förder}), le manchon de film rétractable (1) étant transporté par la paire de rouleaux de transport (4a, b) vers la paire de rouleaux de distribution (5a, b) (phase 2),
- la vitesse de transport de la paire de rouleaux de distribution (5a, b) est augmentée à une vitesse (V_{Abreiss}), ce qui entraîne le détachement du manchon de film rétractable (1) au niveau de la perforation (7) et la séparation des bords de détachement (11a, b) (phase 3),
- la paire de rouleaux de distribution (5a, b) est accélérée à une vitesse de transport (V_{Abschieß}), qui est de préférence supérieure à la vitesse de détachement (V_{Abreiß}), ce qui accélère et rabat le manchon de film rétractable (1a) séparé (phase 4), et
- la paire de rouleaux de distribution (5a, b) est ralentie à la vitesse de transport de la paire de rouleaux de transport (4a, b) (V_{Förder}) (phase 5).

5. Procédé selon la revendication 4, **caractérisé en ce qu'**entre les phases 3 et 4, dans une phase 3a, la paire de rouleaux de distribution (5a, b) est ralentie à la vitesse de transport de la paire de rouleaux de transport (V_{Förder}), de sorte que le manchon de film rétractable (1a) détaché est transporté en synchronisme avec le manchon de film rétractable suivant (1), et n'est accéléré qu'ensuite à la vitesse de transport (V_{Abschieß}).

6. Procédé selon au moins l'une quelconque des revendications 1 à 5, **caractérisé en ce que** les phases 2 à 5 sont répétées en continu.

7. Procédé selon au moins l'une quelconque des revendications 1 à 6, **caractérisé en ce que** la vitesse de transport (V_{Förder}) de la paire de rouleaux de transport (4a, b) est constante, en particulier pendant les phases 2 à 5.

8. Procédé selon au moins l'une quelconque des revendications 1 à 7, **caractérisé en ce qu'**au moins la paire de rouleaux de distribution (5a, b) est entraînée par un servomoteur.

9. Procédé selon au moins l'une quelconque des revendications 1 à 8, **caractérisé en ce que** le récipient (9) est transporté au-dessous du dispositif d'ouverture (3) à l'aide d'un dispositif de transport (10) dans une direction de transport (P) et le manchon de film rétractable (1) plié à plat est amené au dispositif d'ouverture (3) de telle sorte que le côté plat du manchon de film rétractable s'étend sous un angle β de 0 à < 90°, de préférence de 0° par rapport à la direction de transport (P).

10. Procédé selon au moins l'une quelconque des revendications 1 à 9, **caractérisé en ce que** la paire de rouleaux de transport (4a, b) et la paire de rouleaux de distribution (5a, b) sont entraînées en continu à une vitesse respectivement constante, la vitesse de transport de la paire de rouleaux de distribution étant avantageusement jusqu'à 10 fois plus grande, de préférence de 2 à 10 fois plus grande que la vitesse de transport de la paire de rouleaux de transport (4a, b).

11. Dispositif pour mettre en oeuvre le procédé selon au moins l'une quelconque des revendications 1 à 9, comprenant
- un dispositif d'ouverture, notamment un mandrin d'ouverture (3) pour ouvrir un manchon de film rétractable (1) perforé,
- une première paire de rouleaux de transport (4a, b) pour transporter le manchon de film rétractable (1) ouvert le long du dispositif d'ouverture (3),
- une paire de rouleaux de distribution (5a, b) en aval pour détacher le manchon de film rétractable (1) au niveau de la perforation (7),
- une commande (6) qui commande un entraînement de la paire de rouleaux de distribution (5a, b) pour détacher le manchon de film rétractable (1) de telle sorte que la vitesse de transport (V_{Abreiß}) de la paire de rouleaux de distribution (5a,b) soit au moins temporairement supérieure à la vitesse de transport (V_{Förder}) de la paire de rouleaux de transport (4a,b), la commande (6) pour éjecter le manchon de film rétractable (1) séparé commandant l'entraînement de la paire de rouleaux de distribution de telle sorte que la vitesse de transport (V_{Abschieß}) de la paire de rouleaux de distribution (5a,b) soit supérieure à la vitesse de transport (V_{Abreiß}) pour détacher le manchon de film rétractable (1)
ou
la paire de rouleaux de distribution (5a, b) présente, pour l'étape de rabattement, une vitesse de transport (V_{Abschieß}) qui correspond à la vitesse de transport (V_{Abreiß}), le dispositif comprenant en outre un dispositif de perforation (2) pour perforer un manchon de film rétractable (1) à des intervalles prédéterminés (a), et un dispositif tampon (III) agencé en aval du dispositif de perforation.

12. Dispositif selon la revendication 10, **caractérisé en ce qu'**au moins la paire de rouleaux de distribution (5a, b) est entraînée au moyen d'un servomoteur.

13. Dispositif selon au moins l'une quelconque des revendications 11 à 12, **caractérisé en ce que** l'intervalle entre la paire de rouleaux de transport (4a, b) et la paire de rouleaux de distribution (5a, b) peut être réglé par l'intermédiaire d'un dispositif de réglage.

14. Dispositif selon au moins l'une quelconque des revendications 11 à 13, **caractérisé en ce que** le dispositif comprend un dispositif de transport (10) qui est agencé au-dessous du dispositif d'ouverture (3) et qui transporte le récipient dans la direction de transport (P), et un dispositif d'alimentation (8, 926) qui est agencé de telle sorte que le manchon de film rétractable (1) plié à plat est transporté vers le dispositif d'ouverture (3) de telle sorte que le côté plat du manchon de film rétractable s'étend sous un angle (β) de 0 à <90°, de préférence de 0° par rapport à la direction de transport (P).

15. Dispositif selon au moins l'une quelconque des revendications 11 à 14, **caractérisé en ce que** le dispositif d'alimentation (8, 926) est conçu de manière réglable pour régler un angle (3) entre le côté plat du manchon de film rétractable (1) et la direction de transport (P) de la direction de transport (10) dans une plage de 0 à 90°.
